# EUROPEAN PATENT SPECIFICATION

(11) **EP 1 676 480 B1**
(45) Date of publication and mention of the grant of the patent: **12.06.2013**
(21) Application number: 04816204.4
(22) Date of filing: 14.09.2004
(51) Int. Cl.: A01N 49/00, A01N 25/18, A01N 25/08, A01N 35/02, A01N 37/02

(54) **SUSTAINED-RELEASE PHEROMONE PREPARATION**
PHEROMONPRÄPARAT MIT HINHALTENDER WIRKSTOFFFREIGABE
PREPARATION DE PHEROMONE A LIBERATION PROLONGEE

(30) Priority: 24.09.2003 JP 2003331082
(43) Date of publication of application: 05.07.2006
(73) Proprietor: Sankei Chemical Co., Ltd., Kagoshima-shi, Kagoshima 891-0122 (JP)
(72) Inventor: INO, Masaaki,, Saitama 3660032 (JP); HONGO, Tomoaki,, Saitama 3660032 (JP); TAKEMURA, Kaoru,, Kagoshima 8910122 (JP); KAWABATA, Akihiro,, Kagoshima 8910122 (JP); MATSUNAGA, Tadashi,, Kagoshima 8910122 (JP)
(74) Representative: HOFFMANN EITLE
(86) International application number: PCT/JP2004/013364
(87) International publication number: WO 2005/027640

(56) References cited:
- EP-A1- 1 064 843
- EP-A1- 1 364 579
- WO-A1-00/19820
- WO-A1-03/061383
- GB-A- 2 064 323
- JP-A- 56 104 802
- JP-A- 2001 072 506
- JP-A- 2001 247 410
- JP-A- 2002 520 256
- US-A- 2 067 406

## Description

### TECHNICAL FIELD

The present invention relates to a sustained release pheromone formulation, and more particularly relates to a sustained release pheromone formulation useful as an agricultural insect pest control agent that does not pollute the environment and for which the sustained release can be controlled.

### BACKGROUND ART

Currently, most agricultural chemicals developed are synthetic organic substances, with these substances being used in the form of a formulation prepared in accordance with the objective. However, environmental awareness has increased in recent years, and there has been a multitude of discussion regarding the safety of spraying agricultural chemicals.

In recent years in particular, great improvements have been made with regard to the load on humans, animals, and the environment, but the current state of affairs is still that most chemicals are sprayed directly onto agricultural crops, and hence there are worries over chemical residue on crops, chemical residue in the soil, runoff into rivers and so on, i.e. there has been no improvement on a fundamental level.

Furthermore, effects of agricultural chemicals that are being seen include it becoming difficult to control insect pests that have acquired resistance to an insecticide, and secondary insect pests appearing due to the widespread use of insecticides. Calls have been increasing for an insect pest control means other than that based on spraying insecticides.

Amid this state of affairs, "environmental conservation type agriculture" in which consideration is given to reducing the load on the environment while maintaining or increasing productivity has recently come to be promoted by the state, prefectures, and concerned groups, and the importance of integrated control in which, rather than insect pest control relying purely on spraying agricultural chemicals, insect pest control is carried out by combining various materials that are not liable to cause a load to be placed on the environment has come to be advocated.

Specifically, insect pest control methods using a combination of biological control materials for which the load on the environment is low such as natural enemy and insect pheromones have come to be studied, and have been subjected to agricultural chemical registration and put into actual use. Currently, most insect pheromones directly used in insect pest control are sex pheromones; research is also being carried out into the use of aggregation pheromones and warning pheromones, but the stage of actual implementation has not yet been reached.

Such sex pheromones exhibit activity in very small amounts, only produce an effect on insect pests within the same species, and are relatively simple compounds comprising carbon, hydrogen and oxygen. Such sex pheromones thus have advantages such as being highly safe, and there being no worries over residue, and hence insect pest control methods using such sex pheromones meet the above objectives of integrated control and environmental conservation type agriculture.

Methods of using insect pest control agents using sex pheromones can be broadly classified into two, i.e. communication disturbance methods and mass attraction and killing methods; which is used depends on the types of the insect and the agricultural crop, with various sex pheromone insect pest control agents having been put into actual use (see, for example, "Pheromone Agent Usage Guide" (in Japanese), pages 1 and 101, published 29 February 2000 by the Japan Plant Protection Association).

A communication disturbance method is a method in which a component the same as a sex pheromone released by an insect pest, or part thereof is released into the air continuously in at least a certain amount, whereby the activity of males seeking females reliant on the sex pheromone is hindered, and hence mating is inhibited. Currently, most communication disturbing formulations are formulations in which a sex pheromone component is sealed in polyethylene tubes, and then the sex pheromone component is released from the tubes.

As described above, with a communication disturbing formulation, it is important that the pheromone is released in at least a certain amount over a certain period; however, commercially available communication disturbing formulations currently have a drawback of being prone to being affected by the air temperature, with the sex pheromone being released more than necessary when the temperature is high in the summertime in particular. Cases thus arise in which, during the period over which the insect pest control is required, the sex pheromone in the tubes becomes insufficient in amount or is completely exhausted, whereby fluctuation in the effect or loss of the effect arises.

Such a situation is a very serious problem for a communication disturbing formulation that is often used over a long period. Furthermore, so that a tube formulation can be installed easily on agricultural land, many such tube formulations comprise a combination of the tubes and wire, and hence a problem of environmental pollution arises if the formulation is just abandoned after use. The trouble of recovery is thus required, and hence there has been a problem that agricultural workers are made to expend much time and effort.

A mass attraction and killing method is a method in which a large number of males are attracted using the strong attracting force of a sex pheromone, and then killed using an insecticide or the like. As formulations using this method, ones comprising a sex pheromone or a mixture of a sex pheromone and an insecticide component (agricultural chemical) in polyethylene tubes, or on a rubber or wooden board, or the like have been put into actual use. However, such formulations have had the same problems as communication disturbing formulations described above.

As an insecticide used in the mass attraction and killing method, there has been proposed an attracting insecticide composition for agriculture and horticulture according to which insects can be attracted and thus controlled effectively but there is little effect on the environment, the attracting insecticide composition having a natural pheromone and a component having insecticidal activity contained in small spherical grains of a mineral material (see, for example, the claims of Japanese Patent Application Laid-open No. 2001-72506).

GB 2 064 323 A relates to a solid formulation comprising a sex pheromone of insects as an active substance, and a carrier comprising a mixture of an inert material having absorbing properties and an inert material having adsorbing properties in certain portions. The document does not disclose a fired crystalline substrate.

EP 1 064 843 A1 published on January 3, 2001, relates to the production of semiochemical emitters having a controlled emission speed, which are based on inorganic molecular sieves. The term "semiochemical" seems to denote all kinds of chemical compounds affecting the communication among insects. The document does not disclose a crystalline substrate that has been fired at a temperature within the range of 550 - 700 C for 5 - 120 minutes. Also no combination of such a material and a pheromone is disclosed.

EP 1 364 579 A1 relates to an entomopathogenic microorganism spores carrier and a method for controlling harmful insects. The document does not disclose a crystalline substrate that has been fired at a temperature within the range of 550 - 700 C for 5 - 120 minutes. Also no combination of such a material and a pheromone is disclosed.

WO 00/19820 A1 relates to a composition for attracting lepidopteran species. The composition may in one embodiment comprise a pheromone. It is also described that the composition may be formulated together with an inert carrier, or may be incorporated in a solid substrate, such as clays, diatomaceous earth, silica, polyvinyl chloride, polystyrene, polyurethanes, ureaformaldehyde condensates and starches, also including vermiculite and paraffinic or bees wax. The document does not disclose a crystalline substrate that has been fired at a temperature within the range of 550 - 700 C for 5 - 120 minutes. Also no combination of such a material and a pheromone is disclosed.

WO 03/061383 A1 relates to a sustained-release composition comprising an absorbing carrier and a biologically active substance. The document does not disclose a crystalline substrate that has been fired at a temperature within the range of 550 - 700°C for 5 - 120 minutes. Also no combination of such a material and a pheromone is disclosed.

This attracting insecticide composition for agriculture and horticulture is an attracting insecticide composition according to which problems such as the state of spraying of the chemical becoming uneven due to weather conditions such as wind and rain, and the sprayed chemical being carried away or being drawn into the ground due to wind and rain so that the effect thereof decays within a short time period after the spraying have been resolved; however, there is no mention whatsoever of sustained release of the sex pheromone.

### DISCLOSURE OF THE INVENTION

It is an object of the present invention to resolve the above problems of communication disturbing formulations, and provide a sustained release pheromone formulation that is not affected by the air temperature, is able to release a sex pheromone at a constant rate, does not require troublesome recovery after use, and moreover does not pollute the environment.

The present inventors carried out studies to solve the above problems focusing on the substrate in which the sex pheromone is contained, and as a result discovered that the above problems can be solved by using a fired crystalline mineral, which is obtainable by steps including subjecting the crystalline mineral to a firing at a temperature of 550 - 700 °C for a time period of 5 to 120 minutes, as the substrate, and based on this finding, have accomplished the present invention.

That is, the means of the present invention for attaining the above object is a sustained release pheromone formulation as defined in claim 1.

Preferable forms of the means of the present invention are the following sustained release pheromone formulations (1) to (3) .
(1) The above sustained release pheromone formulation, wherein the crystalline mineral is a crystalline clay mineral.
(2) The above sustained release pheromone formulation, wherein the pheromone is a natural pheromone and/or a synthetic pheromone.
(3) The above sustained release pheromone formulation, wherein the pheromone content is 1 to 30 weight % relative to the total mass of the crystalline mineral and the pheromone.

### Effects of the present invention

According to the present invention, there is provided a sustained release pheromone formulation in which a fired crystalline mineral is used as a substrate in which a sex pheromone is contained, as defined in claim 1. As a result, it is thought that the pheromone is taken into the crystal lattice of the crystalline mineral, and hence the sustained

release pheromone formulation is not affected by the air temperature, is able to release the sex pheromone at a constant rate, does not require troublesome recovery after use since the crystalline mineral is itself weathered back into useful soil, and moreover does not pollute the environment. The sustained release pheromone formulation will thus contribute greatly to control of insect pests on agricultural land, mountainous land, golf courses, and so on.

### BRIEF DESCRIPTION OF THE DRAWINGS

FIG. 1 is a chart showing the pheromone survival rate for formulations manufactured in Reference Examples 1 and 2;
FIG. 2 is a chart showing the pheromone survival rate for formulations manufactured in Reference Examples 3 to 5;
FIG. 3 is a graph showing the pheromone (Z-11-16AC) survival rate for diamond-back moth communication disturbing agents manufactured in Reference Example 6 and procured in Comparative Example 1;
FIG. 4 is a graph showing the pheromone (Z-11-16AL) survival rate for diamond-back moth communication disturbing agents manufactured in Reference Example 6 and procured in Comparative Example 1;
FIG. 5 is a graph showing the pheromone vaporization amount for sugarcane wireworm attractants manufactured in Reference Example 7 and procured in Comparative Example 2;
FIG. 6 is a graph showing the pheromone (Z-11-16AC) survival rate for diamond-back moth communication disturbing agents manufactured in Reference Example 8 and procured in Comparative Example 3; and
FIG. 7 is a graph showing the pheromone (Z-11-16AL) survival rate for diamond-back moth communication disturbing agents manufactured in Reference Example 8 and procured in Comparative Example 3.

### BEST MODE FOR CARRYING OUT THE INVENTION

A sustained release pheromone formulation of the present invention contains a pheromone in a fired crystalline mineral. There are no particular limitations on the crystalline mineral used in the present invention so long as this crystalline mineral is a mineral having a crystalline structure, but a crystalline clay mineral is preferable. Examples of the crystalline clay mineral include sepiolite, palygorskite, Kaolinate, halloysite, metahalloysite, illite, vermiculite, montmorillonite, beidellite, nontronite, saponite, chlorite, attapulgite, zeolites, gibbsite, hematite, goethite, limonite, and pyrolusite. Each of these crystalline clay minerals may be either a natural mineral or a synthetic mineral. Of crystalline minerals, clay minerals of a multiple-chain structure type having a fibrous form, 2:1 clay minerals having a tabular form, and silicas are preferable, with sepiolite, palygorskite, and montmorillonite being particularly preferable.

There are no particular limitations on the pheromone used in the present invention so long as this pheromone is an insect-derived pheromone or a pheromone synthesized such as to have the same molecular structure, i.e. examples are natural pheromones and synthetic pheromones. A natural pheromone is a pheromone that is produced in the body of an animal, and is secreted out of the body so as to exhibit any of various effects on other individuals of the same species. A synthetic pheromone is an artificially synthesized chemical substance that has the same chemical structure as, or a similar chemical structure to, a natural pheromone, and exhibits substantially the same effect as the natural pheromone.

Examples of such natural pheromones and synthetic pheromones are acetate compounds, aldehyde compounds, alcohol compounds, and other compounds. Specifically, examples of acetate compounds include tetradecyl acetate, 10-methyldodecyl acetate, 11-dodecenyl acetate, methylphenyl acetate, phenylethyl propionate, (Z)-5-decenyl acetate, (Z)-7-decenyl acetate, (E)-8-decenyl acetate, (Z)-9-decenyl acetate, (Z)-9-hexadecenyl acetate, (Z)-9-tetradecenyl acetate, (Z)-10-tetradecenyl acetate, (Z)-11-hexadecenyl acetate, (Z)-11-tetradecenyl acetate, (E)-11-hexadecenyl acetate, (Z)-11-octadecenyl acetate, (E)-11-tetradecenyl acetate, (E)-12-tetradecenyl acetate, (Z,E)-9,12-tetradecadienyl acetate, (Z,E)-9,11-tetradecadienyl acetate, (Z,Z)-3,13-octadecadienyl acetate, (E,Z)-3,13-octadecadienyl acetate, and (E,Z)-4,10-octadecadienyl acetate.

Specific examples of aldehyde compounds include hexadecanal, (Z)-9-hexadecenal, (Z)-11-hexadecenal, (E)-11-hexadecenal, (Z)-13-octadecenal, and (Z,Z,Z)-9,12,15-octadecatrienal.

Specific examples of alcohol compounds include (Z)-8-dodecen-1-ol, (Z)'-9-tetradecen-1-ol, (Z)-11-hexadecen-1-ol, 2,6-dimethyloctan-1-ol, and (Z,E)-9,12-tetradecadien-1-ol.

Specific examples of other compounds include (Z)-13-icosen-10-one, (R,Z)-(-)-5-(1-decenyl)oxacyclopentan-2-one, cis-7-tetradecen-2-one, trans-7-tetradecen-2-one, 4,6-dimethyl-7-hydroxynonan-3-one, 2,3-dihydro-2,3,5-trimethyl-6-(1-methyl-2-butenyl)-4H-4-one, (3Z,6Z,9S,10R)-9,10-epoxy-3,6-henicosadiene, (3Z,6Z,9S,10R)-9,10-epoxy-1,3,6-henicosatriene, methyl (Z)-5-tetradecenoate, 14-methyl-1-octadecene, (Z)-3-dodecenyl (E)-2-butenoate, and 2,6-dimethyloctyl formate.

There are no particular limitations on the amount of the pheromone contained in the crystalline mineral. Although dependent on the chemical nature of the pheromone, the pheromone content is generally 1 to 30 mass %, preferably 2 to 25 mass %, relative to the total mass of the crystalline mineral and the pheromone.

If the pheromone content is less than 1 mass %, then although dependent on the chemical nature of the pheromone, the effect of the pheromone will generally not be sufficiently exhibited over an effective time period; if the pheromone content exceeds 30 mass %, then an effect commensurate with the increased amount cannot be expected.

The sustained release pheromone formulation of the present invention may contain an antioxidant and/or a UV absorber. Examples of antioxidants include phenolic compounds such as 2,6-di-t-butyl-p-cresol, butylated hydroxyanisole, 2,6-di-t-butyl-4-ethylphenol, stearyl-β-(3,5-di-t-butyl-4-hydroxyphenyl) propionate, 2,2'-methylene-bis-(4-methyl-6-t-butylphenol), 2,2'-methylene-bis-(4-ethyl-6-t-butylphenol), 4,4'-thio-bis(3-methyl-6-t-butylphenol), 4,4'-butylidene-bis(3-methyl-6-t-butylphenol), 3,9'-bis[1,1-dimethyl-2-[β-(3-t-butyl-4-hydroxy-5-methylphenyl )propionyloxy]ethyl], 2,4,8,10-tetraoxaspiro[5,5]undecane, 1,1,3-tris(2-methyl-4-hydroxy-5-t-butylphenyl)butane, 1,3,5-trimethyl-2,4,6-tris-3,5-di-t-butyl-4-hydroxybenzyl) benzene, tetrakis-[methylene-3-(3',5'-di-t-butyl-4'-hydroxyphenyl) propionate]methane, 1,3,5-tris(3',5'-di-t-butyl-4'-hydroxybenzyl)-sec-triazine-2,4, 6-(1H,3H,5H)trione, and tocopherol.

Moreover, other examples of antioxidants include phenylenediamine compounds such as N-phenyl-N'-isopropyl-p-phenylenediamine, N,N'-di-sec-butyl-p-phenylenediamine, and N-phenylbutyl-N-sec-butyl-p-phenylenediamine, hydroquinone compounds such as 2,5-di-t-octylhydroquinone, 2,6-didodecylhydroquinone, and 2-dodecylhydroquinone, and organic sulfur compounds such as dilauryl-3,3'-thiodipropionate, distearyl-3,3'-thiodilauryl thiodipropionate, dimyristin-3,3'-thiodipropionate, distearyl-3,3'-thiodipropionate, and tetradecyl-3,3'-thiodipropionate.

Furthermore, other examples of antioxidants include organic phosphorus compounds such as triphenyl phosphite, phenyl diisodecyl phosphite, 4,4'-butylidene-bis(3-methyl-6-t-butylphenylditridecyl) phosphite, cyclic neopentane tetrayl bis, tris(monononylphenyl) phosphite, tris(dinonylphenyl) phosphite, diisodecyl pentaerythritol diphosphite, 9,10-dihydro-9-oxa-10-phosphaphenanthrene-10-oxide, 10-(3,5-di-t-butyl-4-hydroxybenzyl)-9,10-dihydro-9-oxa-10-phos phaphenanthrene-10-oxide, 10-decyloxy-9,10-dihydro-9-oxa-10-phosphaphenanthrene, tris(2,4-di-t-butylphenyl) phosphite, cyclic neopentane tetrayl bis(2,4-di-t-butylphenyl) phosphite, cyclic neopentane tetrayl bis(2,6-di-t-butylphenyl) phosphite, and 2,2-methylenebis(4,6-di-t-butylphenyl)octyl phosphite.

Erythorbic acid, sodium erythorbate, isopropyl citrate, dibutylhydroxytoluene, D-α-tocophenol, nordihydroguaretic acid, butylhydroxyanisole, propyl gallate, and so on can also be used as antioxidants.

Moreover, examples of UV absorbers include salicylic acid compounds such as phenyl salicylate, butylphenyl salicylate and octylphenyl salicylate, benzophenone compounds such as 2,4-dihydroxybenzophenone, 2-hydroxy-4-methoxybenzophenone and 2-hydroxy-4-octoxybenzophenone, and benzotriazole compounds such as 2-(2-hydroxy-5'-methylphenyl)benzotriazole, 2-(2'-hydroxy-3-5'-butylphenyl)hydroxymethylphenyl benzotriazole, and 2-(2'-hydroxy-3'-t-butylmethylphenyl)benzotriazole.

Such antioxidants and UV absorbers may be used alone, or the two may be used together. Moreover, one of the specific compounds given as examples above may be used, or a plurality may be used together. There are no particular limitations on the amount used of these antioxidants and UV absorbers, but this amount is usually 0.1 to 5 parts by mass per 100 parts by mass of the pheromone.

Furthermore, the sustained release pheromone formulation of the present invention may be made to contain an organic solvent as a sustained release controlling agent able to control how gradual the sustained release is . Examples of such an organic solvent include oils such as mineral oils and vegetable oils, and aromatic, aliphatic, glycol ether type, and naphthalenic organic solvents having a high boiling point of 200 to 300 °C. Of these, 1-phenyl-1-xylylethane, phenoxyethanol, and so on can be preferably used. There are no particular limitations on the amount used of the organic solvent, but this amount is generally 1 to 10 parts by mass per 100 parts by mass of the pheromone.

The sustained release pheromone formulation of the present invention can be manufactured by taking a crystalline mineral as described above as a substrate, and making the substrate contain the pheromone.

One form of the substrate is a powder obtained by pulverizing the crystalline mineral. There are no limitations on the pulverization means; means for carrying out the pulverization using an impact type pulverizer, a mechanical pulverizer, a jet type pulverizer, or the like can be adopted.

An impact type pulverizer is a machine that has a rotor that is supported on a rotating shaft and has formed on an outer peripheral surface thereof a large number of undulations that continue in a circumferential direction and are parallel to a generating line, and a casing that is fitted around the outside of the rotor with a small gap provided therebetween and has formed on an inner peripheral surface thereof a large number of undulations that continue in the circumferential direction and are parallel to the generating line, the matter to be pulverized being pulverized in a pulverizing chamber formed from the above-mentioned small gap.

A mechanical pulverizer is a machine that comprises a rotor that rotates at high speed and a liner having a large number of grooves therein, pulverization being carried out in a gap between the rotor and the liner through the relative rotation therebetween, and also through laminar flow and vortical motion of air arising behind the rotor and in the grooves of the liner.

Moreover, a jet type pulverizer is a machine in which a closed circuit is formed, and the matter to be pulverized is placed in a high-speed air jet and pulverized by being made to strike an impact plate. It is preferable for each of the pulverizers to further have a classifying mechanism.

There are no particular limitations on the particle size of the powder obtained by pulverizing using such a pulverizer, but this is generally 0.1 to 150 µm, preferably 2 to 20 µm.

Moreover, another possible form of the substrate is molded bodies of any of various forms obtained from a kneaded material prepared by adding water and a binder as necessary to a powder obtained by pulverizing as described above and kneading. The form of the substrate may be a powder, but is preferably molded bodies.

Examples of the form of the molded bodies include granular, rod-shaped, and tabular, and the shape may be, for example, spherical, hollow, cylindrical, or prismatic. There is no limitation on the size of the molded bodies, which may be decided as appropriate in accordance with the mode of use.

As a binder used as necessary, a water-soluble macromolecular substance is preferable, with examples including polyvinyl alcohol, polyvinyl pyrrolidone, polyacrylic acid, polyacrylamide, polyethylene oxide, polyethylene imide, and carboxymethyl cellulose.

There are no particular limitations on the amount of water added to the powder, but this is generally 10 to 20 parts by mass per 100 parts by mass of the pulverized matter. Moreover, the kneading temperature and time are generally 10 to 30 °C and 15 to 60 minutes respectively.

There are no particular limitations on the kneader, with examples including a mixing roller, a Banbury mixer, a vaned kneader, a high-speed twin-screw continuous Banbury mixer, and an extruder kneader.

There are no particular limitations on the molding means, with a molding method such as molding using a tablet machine, compression molding, injection molding, or extrusion molding being adopted. Compression molding is a molding method in which the molding material is filled into the cavity of a heated mold, and molding is carried out by applying pressure. Injection molding is molding method in which the molding material which has been heated in a screw cylinder is injected under high pressure into a mold so as to carry out molding. Moreover, extrusion molding is a method in which the molding material is extruded from a heated cylinder using a screw so as continuously mold a molded body with a fixed cross-sectional shape. Molded bodies of any chosen form can be obtained by choosing which molding method to use and by changing the mold.

In the sustained release pheromone formulation of the present invention, the crystalline mineral constituting the substrate is fired. The firing is preferably carried out under conditions such that the crystalline structure of the crystalline mineral is maintained. That is, care must be taken that firing conditions under which the crystalline structure of the crystalline mineral will disintegrate are not adopted. It is, however, not necessary for the crystalline structure of the crystalline mineral to have been completely maintained after the firing. Rather, even if the crystalline structure is partially disintegrated or transformed, it is sufficient so long as the crystalline mineral still has a substantially crystalline structure overall.

Regarding the conditions under which the crystalline structure of the crystalline mineral is maintained, the firing temperature is an especially important factor, but this firing temperature depends on the type of the crystalline mineral used and is not the same across the board. In general it is preferable to use a firing temperature such that the crystalline mineral is not turned into a ceramic.

For example, representative examples of crystalline minerals that can be preferably used in the present invention include sepiolite, palygorskite and montmorillonite. For these and for other crystalline minerals used in the present invention, the firing temperature is 550 to 700 °C. This temperature range has been discovered by trial and error through comparative observation using an electron microscope of the crystalline structure before and after firing crystalline minerals such as sepiolite, palygorskite and montmorillonite. firing time is 5 to 120 minutes, preferably 30 to 60 minutes. Firing for a long time may bring about disintegration of the crystalline structure of the crystalline mineral and is thus undesirable.

As the means for making the crystalline mineral contain the pheromone, any of various means can be adopted. There are no particular limitations on the means, for example means in which the crystalline mineral is immersed in the pheromone or a solution containing the pheromone so as to impregnate the pheromone into the crystalline mineral, means in which the pheromone or a solution containing the pheromone is sprayed onto the crystalline mineral so as to support the pheromone on the crystalline mineral, or the like can be adopted.

The sustained release pheromone formulation of the present invention is manufactured by making the crystalline mineral contain the pheromone as described above. As well as containing the pheromone, the sustained release pheromone formulation of the present invention may contain an antioxidant, an age resistor, a UV absorber, or a sustained release controlling agent. Specific examples and usage amounts thereof are as described earlier.

The sustained release pheromone formulation of the present invention can be made into any of various forms such as powdered, granular, rod-shaped or tabular as described earlier, and moreover has various possible modes of use in accordance with the form.

Specifically, if the sustained release pheromone formulation is made into a powdered or granular formulation, then the formulation can be scattered or deposited on land where insect pest control is required such as agricultural land, mountainous land, or a golf course. If the sustained release pheromone formulation is made into a rod-shaped formulation, then the formulation can be inserted into and thus installed upright on the desired land, or can be bound to a tree. Moreover, if the sustained release pheromone formulation is made into a tabular formulation, then the formulation can be laid on the desired land, or can be covered over vegetation. Furthermore, for any of the forms, the formulation can be hung up in a prescribed place on the desired land.

Moreover, because the sustained release pheromone formulation of the present invention can be used in the form of molded bodies of any of various forms as described earlier, this results in a highly durable formulation that is mechanically and physically strong, and has excellent shape retention, not disintegrating or losing its shape.

Moreover, even if the sustained release pheromone formulation of the present invention is used over a long time period and then abandoned, the crystalline mineral constituting the substrate will itself be weathered back into useful soil, and hence the formulation does not pollute the environment, and is also is safe for humans.

Furthermore, according to the sustained release pheromone formulation of the present invention, because a crystalline mineral is used as the substrate, an effect is produced whereby the sustained release is controlled smoothly, and a constant amount of the pheromone is released homogeneously over a long period of time. The reason for this is not certain, but is surmised to be because the crystalline structure of the crystalline mineral is maintained, and hence the pheromone is taken into the crystal lattice of the crystalline mineral.

Note also that after the pheromone has been completely released, the sustained release pheromone formulation of the present invention can be remanufactured using the means for making the crystalline mineral contain the pheromone as described earlier, and thus used again.

### [Examples]

Following is a more detailed description of the present invention through examples; however, the present invention is not limited whatsoever by these examples.

### (Reference Examples 1 and 2)

Formulations were manufactured by impregnating 5 parts by mass of (Z)-8-dodecenyl acetate (Z-8-12AC) as a pheromone into 95 parts by mass of each of the crystalline clay minerals shown in Table 1. Note that there were two cases for each of the crystalline clay minerals used: not fired but rather dried for 24 hours at 105 °C (unfired material), and fired for 30 minutes at 500 °C in an electric furnace (fired material).

**[Table 1]**

| Reference Example | Structure | Form | Group | Mineral |
|---|---|---|---|---|
| 1 | Crystalline | Fibrous | Chain | Palygorskite |
| 2 | | | | Sepiolite |

### (Evaluation Test 1)

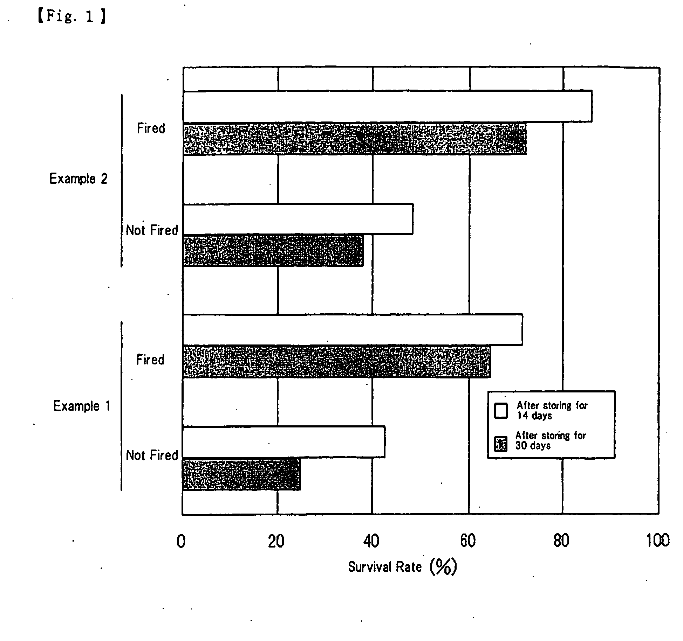

10 g of each of the formulations manufactured in Examples 1 and 2 was spread evenly over a Petri dish, and the Petri dish was placed in an incubator at 40 °C with no air current. Sampling was carried out after 14 days and after 30 days, and the amount of the pheromone was measured in each case using gas chromatography. The pheromone survival rate (%) was calculated from the measured value. The results are shown in Table 2 and FIG. 1. In Table 2 and FIG. 1, the results in the case of using both the unfired material and the fired material are shown.

**[Table 2]**

| Reference Example | Fired? | Initial Value | After 14 days at 40 °C | | After 30 days at 40°C | |
|---|---|---|---|---|---|---|
| | | (mg/g) | (mg/g) | Survival rate(%) | (mg/g) | Survival rate(%) |
| 1 | No | 45.62 | 19.45 | 42.6 | 11.28 | 24.7 |
| | Yes | 45.21 | 32.25 | 71.3 | 29.22 | 64.6 |
| 2 | No | 48.65 | 23.43 | 48.2 | 18.45 | 37.9 |
| | Yes | 59.56 | 42.67 | 86.1 | 35.73 | 72.1 |

From the results shown in Table 2, it can be seen that the period of sustained release of the pheromone is longer for a sustained release pheromone formulation prepared by impregnating the pheromone into a fired crystalline clay mineral than for a sustained release pheromone formulation prepared by impregnating the pheromone into an unfired crystalline clay mineral.

### (Reference Examples 3 to 5)

Water was added to each of the crystalline clay minerals shown in Table 3 and kneading was carried out, and then the kneaded material obtained was molded into cylindrical molded bodies (diameter 10 mm x length 7 mm) using a tablet machine. Next, 5 parts by mass of (Z)-8-dodecenyl acetate (Z-8-12AC) as a pheromone was mixed with and thus impregnated into 95 parts by mass of the molded bodies, thus manufacturing a formulation. Here, there were two cases for the molded bodies of each crystalline clay mineral: not fired but rather dried for 24 hours at 105 °C (unfired material), and fired for 30 minutes at 500 °C in an electric furnace (fired material).

**[Table 3]**

| Reference Example | Mineral |
|---|---|
| 3 | Montmorillonite |
| 4 | Palygorskite |
| 5 | Sepiolite |

### (Evaluation Test 2)

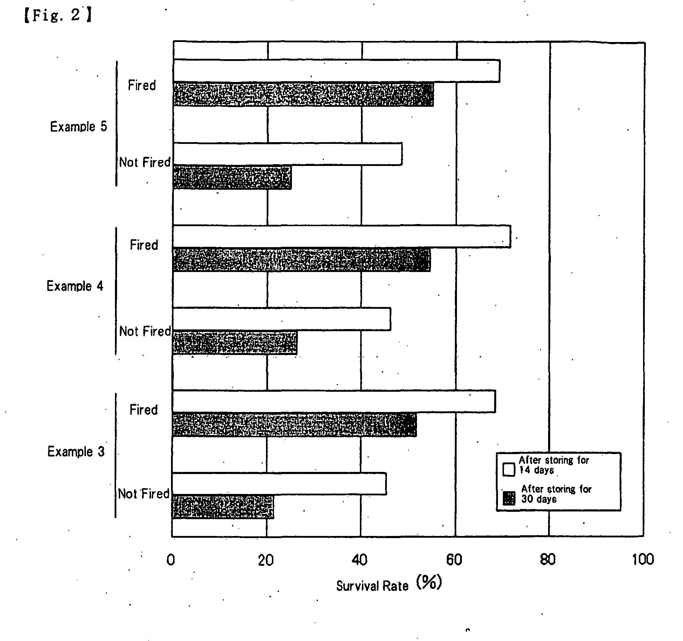

3 grains of each of the formulations manufactured in Reference Examples 3 to 5 were placed in an incubator at 40 °C with no air current. Sampling was carried out after 14 days and after 30 days, and the amount of the pheromone was measured in each case using gas chromatography. The pheromone survival rate (%) for each formulation was calculated from the measured value. The results are shown in Table 4 and FIG. 2.

**[Table 4]**

| Referen ce Example | Fired? | Initial Value (mg/grain) | After 14 days | | After 30 days | |
|---|---|---|---|---|---|---|
| | | | Analytical value (mg/g rain) | Survival rate (%) | Analytical value (mg/gr ain) | Survival rate (%) |
| 3 | No | 52.23 | 23.74 | 45.4 | 11.28 | 21.6 |
| | Yes | 53.80 | 36.75 | 68.3 | 27.81 | 51.7 |
| 4 | No | 51.26 | 23.73 | 46.3 | 13.53 | 26.4 |
| | Yes | 51.31 | 36.79 | 71.7 | 27.96 | 54.5 |
| 5 | No | 48.57 | 23.51 | 48.4 | 12.14 | 25.0 |
| | Yes | 56.21 | 38.84 | 69.1 | 31.03 | 55.2 |

### (Reference Example 6)

Water was added to sepiolite and kneading was carried out, then the kneaded material obtained was molded into spheres of diameter 4 mm using a rolling granulator, and then the molded bodies were fired for 30 minutes at 500 °C in an electric furnace. 11 parts by mass of a mixture of 46 parts by weight of (Z)-11-hexadecenyl acetate (Z-11-16AC) and 46 parts by weight of (Z)-11-hexadecenal (Z-11-16AL) as pheromones along with an antioxidant and a UV inhibitor were impregnated into 89 parts by mass of the sepiolite molded bodies, thus manufacturing a diamond-back moth *(Plutella xylostella)* communication disturbing agent as a sustained release pheromone formulation.

### (Comparative Example 1)

"Konagakon" (trade name) (made by Shin-Etsu Chemical Co., Ltd. , a formulation in which Z-11-16AC and Z-11-16AL as pheromones are encapsulated in polyethylene tubes) was procured as a commercially available diamond-back moth communication disturbing agent.

### (Evaluation Test 3)

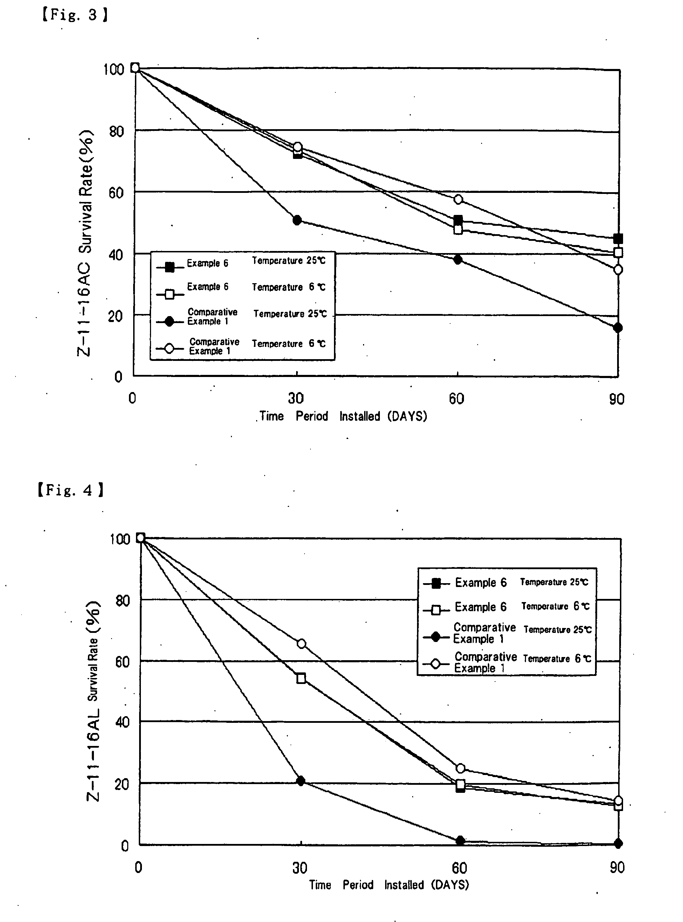

30 grains of the diamond-back moth communication disturbing agent manufactured in Reference Example 6, and 10 tubes of the formulation procured in Comparative Example 1 were each placed outdoors in an area into which people were forbidden to enter for each of two time periods of different air temperature, i.e. June to September and November to the following February, and sampling was carried out periodically, and the amounts of the pheromones in each diamond-back moth communication disturbing agent were measured using gas chromatography. The pheromone survival rate (%) for each diamond-back moth communication disturbing agent was calculated from the measured values. The results are shown in Table 5 and FIGS. 3 and 4. The temperature in Table 5 and FIGS. 3 and 4 is the mean air temperature during the period in question.

**[Table 5]**

| | Reference Example 6 | | | | Comparative Example 1 | | | |
|---|---|---|---|---|---|---|---|---|
| Pheromone | Z-11-16AC | | Z-11-16AL | | Z-11-16AC | | Z-11-16AL | |
| Temperature | 25°C | 6°C | 25°C | 6°C | 25°C | 6°C | 25°C | 6°C |
| After 30 days | 72.1 | 73.6 | 54.5 | 54.1 | 50.8 | 74.6 | 20.7 | 65.3 |
| After 60 days | 50.6 | 47.6 | 18.9 | 19.8 | 37.8 | 57.6 | 1.4 | 24.9 |
| After 90 days | 45.0 | 40.5 | 13.2 | 12.7 | 16.1 | 35.1 | 0.3 | 14.2 |

The values in each of the "After 30 days" column, the "After 60 days" column, and the "After 90 days" column in Table 5 are the pheromone survival rates (%).

### (Reference Example 7)

Water was added to sepiolite and kneading was carried out, then the kneaded material obtained was molded into spheres of diameter 10 mm using a rolling granulator, and then the molded bodies were fired for 30 minutes at 500 °C in an electric furnace. 10 parts by mass of N-dodecyl acetate (N-12AC) was impregnated into 90 parts by mass of the sepiolite molded bodies, thus manufacturing a sugarcane wireworm *(Melanotus okinawensis)* attractant as a sustained release pheromone formulation.

### (Comparative Example 2)

"OKIMERANOKOORU" (trade name) (made by Sankei Chemical Co., Ltd., a formulation in which a pheromone is encapsulated in polyethylene tubes) was procured as a commercially available sugarcane wireworm attractant.

### (Evaluation Test 4)

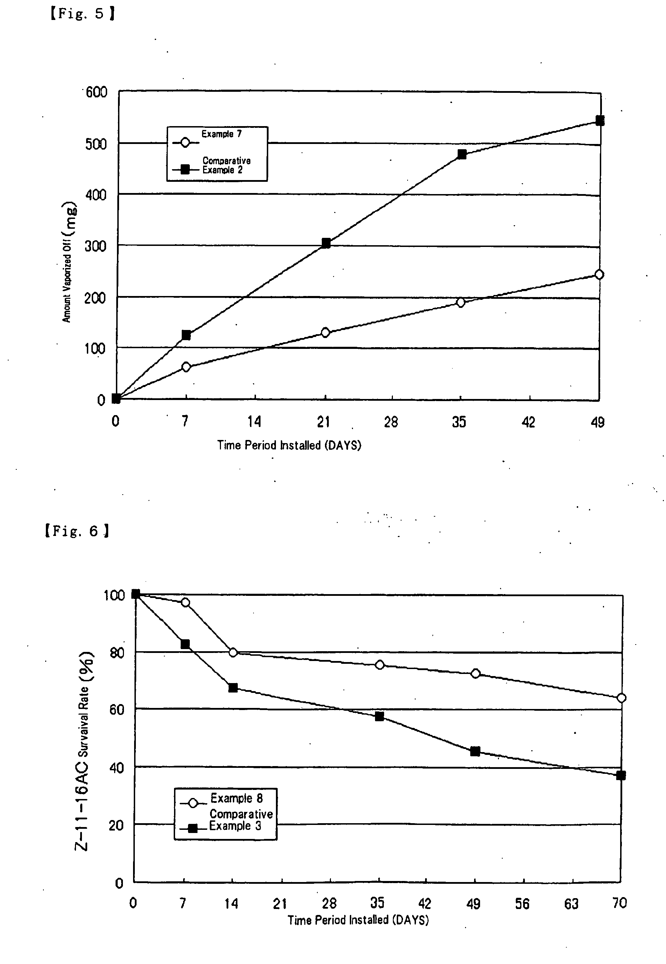

30 grains of the sugarcane wireworm attractant manufactured in Reference Example 7, and the formulation procured in Comparative Example 2 were each placed in a glasshouse in a field in an area into which people were forbidden to enter. Sampling was carried out periodically, and the amount surviving of the pheromone in each sugarcane wireworm communication disturbing agent was measured using gas chromatography. The pheromone vaporization amount (mg) for each sugarcane wireworm communication disturbing agent was calculated from the measured value. The results are shown in Table 6 and FIG. 5.

**[Table 6]**

| | Cumulative amount vaporized off(mg) | | | |
|---|---|---|---|---|
| | After 7days | After 21days | After 35 days | After 49 days |
| Reference Example 7 | 61.5 | 129.1 | 189.4 | 245.1 |
| Comparative Example 2 | 123.1 | 303.4 | 478.6 | 546.5 |

### (Reference Example 8)

Water was added to sepiolite and kneading was carried out, and then the kneaded material obtained was molded into cylindrical molded bodies (diameter 10 mm x length 150 mm) using a tablet machine. The molded bodies were fired for 30 minutes at 500 °C in an electric furnace. 21 parts by mass of a mixture of 46 parts by weight of (Z)-11-hexadecenyl acetate (Z-11-16AC) and 46 parts by weight of (Z)-11-hexadecenal (Z-11-16AL) as pheromones along with an antioxidant and a UV inhibitor were impregnated into 79 parts by mass of the sepiolite molded bodies, thus manufacturing a diamond-back moth communication disturbing agent as a sustained release pheromone formulation.

### (Comparative Example 3)

"Konagakon" (trade name) (made by Shin-Etsu Chemical Co., Ltd., a formulation in which Z-11-16AC and Z-11-16AL as pheromones are encapsulated in polyethylene tubes) was procured as a commercially available diamond-back moth communication disturbing agent.

### (Evaluation Test 5)

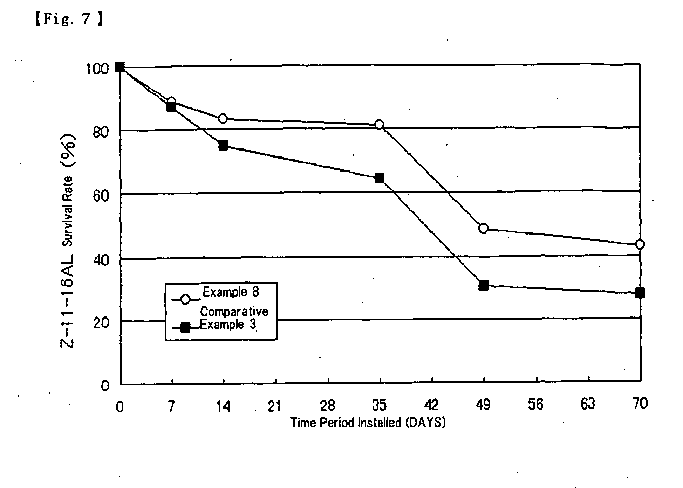

1 cylinder of the diamond-back moth communication disturbing agent manufactured in Reference Example 8 was pushed into the soil surface to a depth of approximately 7 cm. The "Konagakon" in Comparative Example 3 was installed on the end of a bamboo stake for fixing to the soil. The two were left outdoors in an area into which people were forbidden to enter for three months from June to August, and sampling was carried out periodically, and the amounts surviving of the pheromones in each diamond-back moth communication disturbing agent were measured using gas chromatography. The pheromone survival rate (%) for each diamond-back moth communication disturbing agent was calculated from the measured values. The results are shown in Table 7 and FIGS. 6 and 7.

**[Table 7]**

| | Reference Example 8 | | Comparative Example 3 | |
|---|---|---|---|---|
| Pheromone | Z-11-16AC | Z-11-16AL | Z-11-16AC | Z-11-16AL |
| After 7 days | 97.1 | 88.7 | 82.4 | 87.0 |
| After 14 days | 79.6 | 83.4 | 67.3 | 74.8 |
| After 35 days | 75.3 | 80.9 | 57.6 | 43.1 |
| After 49 days | 72.4 | 48.4 | 45.6 | 22.9 |
| After 70 days | 64.1 | 43.1 | 37.0 | 13.6 |

The values in each of the "After 7 days" column, the "After 14 days" column, the "After 35 days" column, the "After 49 days" column, and the "After 70 days" column are the pheromone survival rates (%).

### INDUSTRIAL APPLICABILITY

The sustained release pheromone formulation of the present invention is not affected by the air temperature, is able to release a sex pheromone at a constant rate, does not require troublesome recovery after use since the crystalline mineral used as the substrate is itself weathered back into useful soil, and moreover does not pollute the environment. The sustained release pheromone formulation will thus contribute greatly to control of insect pests on agricultural land, mountainous land, golf courses, and so on.

## Claims

1. A sustained release pheromone formulation comprising a pheromone and a substrate in which the pheromone is contained,
**characterized in that** the substrate is a fired crystalline mineral that is obtainable by steps including subjecting the crystalline mineral to a firing at a temperature of 550 - 700 °C for a time period of 5 to 120 minutes.

2. The sustained release pheromone formulation according to claim 1, wherein said crystalline mineral is a crystalline clay mineral.

3. The sustained release pheromone formulation according to claim 1 or 2, wherein said pheromone is a natural pheromone and/or a synthetic pheromone.

4. The sustained release pheromone formulation according to any one of claims 1 to 3, wherein the pheromone content is 1 - 30 mass% relative to the total mass of said crystalline mineral and said pheromone.

5. The sustained release pheromone formulation according to any one of claims 1 to 4, wherein the crystalline mineral is one selected from the group consisting of clay minerals of a multiple-chain structure type having a fibrous form, 2:1 clay minerals having a tabular form, and silicas.

6. The sustained release pheromone formulation according to any one of claims 1 to 4, wherein the crystalline mineral is one selected from the group consisting of sepiolite, palygorskite, and montmorillonite.

7. A method for producing the sustained release pheromone formulation as defined in any of claims 1 - 6, comprising steps of firing a crystalline mineral at a temperature of 550 - 700 °C for a time period of 5 to 120 minutes, and of making the crystalline mineral contain the pheromone.

## Patentansprüche

1. Pheromonformulierung mit anhaltender Freisetzung, umfassend ein Pheromon und ein Substrat, worin das Pheromon enthalten ist,
**dadurch gekennzeichnet, dass** das Substrat ein gebranntes kristallines Mineral ist, das erhältlich ist durch Schritte, die das Unterziehen des kristallinen Minerals unter ein Brennen bei einer Temperatur von 550 bis 700°C für eine Zeitspanne für 5 bis 120 Minuten umfassen.

2. Pheromonformulierung mit anhaltender Freisetzung gemäß Anspruch 1, worin das kristalline Mineral ein kristallines Tonmineral ist.

3. Pheromonformulierung mit anhaltender Freisetzung gemäß Anspruch 1 oder 2, worin das Pheromon ein natürliches Pheromon und/oder ein synthetisches Pheromon ist.

4. Pheromonformulierung mit anhaltender Freisetzung gemäß irgendeinem der Ansprüche 1 bis 3, worin der Pheromongehalt 1 bis 30 Masse% beträgt, relativ zur Gesamtmasse des kristallinen Minerals und des Pheromons.

5. Pheromonformulierung mit anhaltender Freisetzung gemäß irgendeinem der Ansprüche 1 bis 4, worin das kristalline Mineral ausgewählt ist aus der Gruppe bestehend aus Tonmineralien vom Typ mit multipler Kettenstruktur, die eine Faserform aufweisen, 2:1-Tonmineralien mit tafelförmiger Form und Silika-Materialien.

6. Pheromonformulierung mit anhaltender Freisetzung gemäß irgendeinem der Ansprüche 1 bis 4, worin das kristalline Mineral eines ist, das ausgewählt aus der Gruppe bestehend aus Sepiolit, Polygorskit und Montmorillonit.

7. Verfahren zur Herstellung der Pheromonformulierung mit anhaltender Freisetzung wie in irgendeinem der Ansprüche 1 bis 6 definiert, umfassend Schritte zum Brennen eines kristallinen Minerals bei einer Temperatur von 550 bis 700°C für eine Zeitspanne von 5 bis 120 Minuten, und zum Inkludieren des Pheromons in dem kristallinen Mineral.

## Revendications

1. Formulation de phéromone à libération prolongée comprenant une phéromone et un substrat dans lequel la phéromone est contenue,
**caractérisée en ce que** le substrat est un minéral cristallin cuit qui peut être obtenu par des étapes incluant la soumission du minéral cristallin à une cuisson à une température de 550 à 700°C pendant une période de 5 à 120 minutes.

2. Formulation de phéromone à libération prolongée selon la revendication 1, dans laquelle ledit minéral cristallin est un minéral d'argile cristallin.

3. Formulation de phéromone à libération prolongée selon la revendication 1 ou 2, dans laquelle ladite phéromone est une phéromone naturelle et/ou une phéromone synthétique.

4. Formulation de phéromone à libération prolongée selon l'une quelconque des revendications 1 à 3, dans laquelle la teneur en phéromone est de 1 à 30 % en masse par rapport à la masse totale dudit minéral cristallin et de ladite phéromone.

5. Formulation de phéromone à libération prolongée selon l'une quelconque des revendications 1 à 4, dans laquelle le minéral cristallin est un élément choisi dans le groupe constitué par les minéraux argileux d'un type de structure à chaîne multiple ayant une forme fibreuse, les minéraux argileux 2:1 ayant une forme tabulaire, et les silices.

6. Formulation de phéromone à libération prolongée selon l'une quelconque des revendications 1 à 4, dans laquelle le minéral cristallin est un élément choisi dans le groupe constitué par la sépiolite, la palygorskite, et la montmorillonite.

7. Procédé pour produire la formulation de phéromone à libération prolongée telle que définie selon l'une quelconque des revendications 1 à 6, comprenant les étapes consistant à cuire un minéral cristallin à une température de 550 à 700°C pendant une période de 5 à 120 minutes, et à faire que le minéral cristallin contienne la phéromone.
